# EUROPÄISCHE PATENTSCHRIFT

(11) **EP 3 325 382 B1**
(45) Veröffentlichungstag und Bekanntmachung des Hinweises auf die Patenterteilung: **11.01.2023**
(21) Anmeldenummer: 16770673.8
(22) Anmeldetag: 22.07.2016
(51) Int. Cl.: B65G 35/06, B65G 43/10

(54) **VERFAHREN ZUR ÜBERGABE EINES WERKSTÜCKTRÄGERS ZWISCHEN ZWEI ZAHNRIEMENFÖRDERERN**
METHOD FOR TRANSFERRING A WORKPIECE CARRIER BETWEEN TWO TOOTHED-BELT CONVEYORS
PROCÉDÉ DE TRANSFERT D'UN PORTE-PIÈCE ENTRE DEUX CONVOYEURS À COURROIE CRANTÉE

(30) Priorität: 24.07.2015 AT 506582015
(43) Veröffentlichungstag der Anmeldung: 30.05.2018
(73) Patentinhaber: STIWA Holding GmbH, 4800 Attnang-Puchheim (AT)
(72) Erfinder: PAUDITZ, Michael, 4690 Schwanenstadt (AT); SÖSER, Norbert, 4690 Oberndorf bei Schwanenstadt (AT)
(74) Vertreter: Burger, Hannes
(86) Internationale Anmeldenummer: PCT/AT2016/060013
(87) Internationale Veröffentlichungsnummer: WO 2017/015685

(56) Entgegenhaltungen:
- EP-A1- 1 275 601

## Beschreibung

Die Erfindung betrifft ein Verfahren zur Übergabe eines Werkstückträgers in einer Fertigungsanlage von einem ersten Förderabschnitt auf einen zweiten Förderabschnitt.

Aus der AT413505 B ist ein allgemeiner Aufbau einer gattungsgemäßen Fertigungsanlage bekannt. Die Fertigungsanlage umfasst einen ersten Förderabschnitt, welcher von einer ersten Steuerung angesteuert wird, und einen zweiten Förderabschnitt, welcher von einer zweiten Steuerung angesteuert wird, wobei der Werkstückträger in einer Führungsanordnung der Fertigungsanlage geführt wird und wobei die Förderabschnitte jeweils einen Zahnriemen umfassen, welche Zahnriemen jeweils mittels einem auf einer Welle einer Antriebseinheit angeordneten Ritzel angetrieben werden und welche Zahnriemen in eine korrespondierende Verzahnung des Werkstückträgers eingreifen, wobei der Werkstückträger durch die Zahnriemen entlang der Führungsanordnung verschoben wird und in einem Übergabebereich sowohl der erste Zahnriemen als auch der zweite Zahnriemen mit der Verzahnung des Werkstückträgers in Wirkverbindung stehen.

Bei den bekannten Fertigungsanlagen wird bei der Übergabe des Werkstückträgers von der Steuerung des ersten Förderabschnittes die aktuelle Position des zweiten Zahnriemens und/oder von der Steuerung des zweiten Förderabschnittes die aktuelle Position des ersten Zahnriemens abgefragt. Dadurch können die beiden Zahnriemen synchronisiert werden, wobei es jedoch notwendig ist, dass zu jeder Zeit die Position der beiden Zahnriemen von der jeweils anderen Steuerung erfasst wird.

Dieses in den bekannten Fertigungsanlagen eingesetzte Verfahren zur Übergabe des Werkstückträgers von dem ersten Förderabschnitt an den zweiten Förderabschnitt weist den Nachteil auf, dass zur Abfrage der Position der Zahnriemen ein Sensor und eine Datenleitung benötigt werden. Wenn während der Übergabe eine Störung in der Übertragung des Lagesignals auftritt oder der Sensor ausfällt oder eine Störung aufweist, dann besteht die Gefahr der Beschädigung der Fertigungsanlage aufgrund der nicht synchronen Zahnriemen.

Die EP 1275601 A1 betrifft ein Verfahren nach dem Oberbegriff des Anspruchs 1 und eine Einrichtung für den Transfer von Werkstücken, die in mindestens einer ersten Gruppe von Arbeitsstationen und in mindestens einer zweiten Gruppe von Arbeitsstationen einer Fertigungslinie bearbeitet werden, wobei eine erste Transfereinrichtung Werkstückträger mit den Werkstücken von Arbeitsstation zu Arbeitsstation der ersten Gruppe bewegt und eine zweite Transfereinrichtung Werkstückträger mit den Werkstücken von Arbeitsstation zu Arbeitsstation der zweiten Gruppe bewegt, wobei die erste Transfereinrichtung die Werkstückträger einer Übergabeeinrichtung übergibt und die Übergabeeinrichtung die Werkstückträger der zweiten Transfereinrichtung zuführt.

Der vorliegenden Erfindung liegt die Aufgabe zugrunde ein verbessertes Verfahren zur Übergabe des Werkstückträgers von dem ersten Förderabschnitt an den zweiten Förderabschnitt zu schaffen.

Diese Aufgabe der Erfindung wird durch das Verfahren gemäß Anspruch 1 gelöst.

Erfindungsgemäß ist ein Verfahren zur Übergabe eines Werkstückträgers in einer Fertigungsanlage von einem ersten Förderabschnitt, welcher von einer ersten Steuerung angesteuert wird, auf einen zweiten Förderabschnitt, welcher von einer zweiten Steuerung angesteuert wird vorgesehen, wobei der Werkstückträger in einer Führungsanordnung der Fertigungsanlage geführt wird und wobei die Förderabschnitte jeweils einen Zahnriemen umfassen, welche Zahnriemen jeweils mittels einem auf einer Welle einer Antriebseinheit angeordneten Ritzel angetrieben werden und welche Zahnriemen in eine korrespondierende Verzahnung des Werkstückträgers eingreifen, wobei der Werkstückträger durch die Zahnriemen entlang der Führungsanordnung verschoben wird und in einem Übergabebereich sowohl der erste Zahnriemen als auch der zweite Zahnriemen mit der Verzahnung des Werkstückträgers in Wirkverbindung stehen, wobei ein virtueller Zahnriemen von der ersten Steuerung als auch von der zweiten Steuerung errechnet wird, welcher sich zu einem gewissen Zeitpunkt in einer gewissen Position befindet, wobei der virtuelle Zahnriemen entsprechend der Zahnteilung der Zahnriemen mehrere virtuelle Zahnlücken aufweist. Auf Basis eines internen Zeitgebers der beiden Steuerungen unter Berücksichtigung der vorgegebenen Verfahrgeschwindigkeit des Werkstückträgers und unter Berücksichtigung der Zahnteilung der Zahnriemen wird eine Sollposition der virtuellen Zahnlücke im Übergabebereich der Förderabschnitte berechnet, wobei sich die virtuelle Zahnlücke ausgehend von einer Referenzposition zu einem Referenzzeitpunkt zu bewegen beginnt und sich mit der vorgegebenen Verfahrgeschwindigkeit in einer Verschieberichtung bewegt, wobei die Zahnriemen über die Antriebseinheiten von der jeweiligen Steuerung derart angesteuert und synchronisiert werden, dass sowohl eine erste Zahnlücke des ersten Zahnriemens als auch eine zweite Zahnlücke des zweiten Zahnriemens mit der Sollposition der virtuellen Zahnlücke synchronisiert wird, so dass der Werkstückträger problemlos in den Übergabebereich eingeschoben wird, wobei im Übergabebereich sowohl der erste Zahnriemen als auch der zweite Zahnriemen mit dem Werkstückträger in Eingriff stehen, wobei die Sollposition der virtuellen Zahnlücke auf Basis der vergangenen Zeiteinheiten seit dem Referenzzeitpunkt berechnet wird.

Ein Vorteil des erfindungsgemäßen Verfahrens liegt darin, dass die erste Steuerung und die zweite Steuerung während der Übergabe des Werkstückträgers nicht durch eine Sensoreinheit bzw. eine entsprechende Datenleitung miteinander gekoppelt sein müssen, um eine Synchronität des ersten Zahnriemens und des zweiten Zahnriemens zu erreichen. Dadurch kann die Fehleranfälligkeit der Übergabe bzw. die Gefahr einer mechanischen Beschädigung aufgrund von fehlerhaften Datenleitungen vermindert werden.

Weiters kann es zweckmäßig sein, dass die internen Zeitgeber der beiden Steuerungen in vorgegebenen Zeitabständen synchronisiert werden. Dabei ist von Vorteil, dass bei abweichender Synchronität der beiden internen Zeitgeber in den Steuerungen diese nach einer bestimmten Zeit wieder hergestellt wird. Dadurch kann erreicht werden, dass die Ungenauigkeit der Zeitgeber in den Steuerungen ausgeglichen werden kann. Somit ist auch nach längerer Betriebsdauer eine sichere Übergabe des Werkstückträgers möglich, wobei an die Quarze in den Zeitgebern nicht extrem hohe Anforderungen gestellt werden müssen.

Ferner kann vorgesehen sein, dass die internen Zeitgeber der beiden Steuerungen vor dem Einfahren des Werkstückträgers in den Übergabebereich synchronisiert werden. Durch diese Maßnahmen kann erreicht werden, dass die internen Zeitgeber zu jenem Zeitpunkt synchronisiert werden, wenn dies auch notwendig ist um eine reibungslose Übergabe des Werkstückträgers erreichen zu können.

Darüber hinaus kann vorgesehen sein, dass die Zahnlücken der Zahnriemen jeweils mit der nächstliegenden virtuellen Zahnlücke synchronisiert werden. Hierbei ist von Vorteil, dass die Zeitdauer bis zum Herstellen von Synchronität der beiden Zahnriemen auf ein Minimum reduziert werden kann.

Vorteilhaft ist auch eine Ausprägung, gemäß welcher vorgesehen sein kann, dass die beiden Steuerungen mittels der Sollposition der virtuellen Zahnlücke und mittels der Geometriedaten der Ritzel eine Sollwinkelstellung der Wellen der Antriebseinheiten berechnen, wobei die Winkelstellungen der Wellen synchronisiert und gegebenenfalls überwacht werden. Dadurch können die direkten Parameter der Steuerung überwacht bzw. eingestellt werden.

Erfindungsgemäß wird die Sollposition der virtuellen Zahnlücke auf Basis der vergangenen Zeiteinheiten seit einem Referenzzeitpunkt berechnet, wobei sich die virtuelle Zahnlücke von einer Referenzposition ausgehend bewegt. Von Vorteil ist hierbei, dass dadurch die pro Steuerung zu verarbeitenden Datenmengen möglichst gering gehalten werden können.

Ferner kann es zweckmäßig sein, dass als Referenzzeitpunkt der letzte Synchronisierungszeitpunkt der internen Zeitgeber der beiden Steuerungen gewählt wird. Die Wahl des Synchronisierungszeitpunktes als Referenzzeitpunkt erweist sich als sinnvoll, da dies jener Zeitpunkt ist, an welchem gesichert ist, dass die beiden Steuerungen dieselbe Zeitbasis aufweisen. Die vergangenen Zeiteinheiten seit diesem Zeitpunkt sind daher kleinstmöglich, wodurch die zu verarbeitende Datenmenge möglichst gering gehalten werden kann.

Darüber hinaus kann vorgesehen sein, dass zum Synchronisieren der internen Zeitgeber der beiden Steuerungen ein Masterzeitgeber festgelegt wird, von welchem die Zeit bezogen wird. Ein derartiger Masterzeitgeber in einem Verbund aus mehreren Steuerungen kann beispielsweise durch eine übergeordnete Zeitgebereinheit realisiert werden. In einer Alternativvariante ist es auch denkbar, dass als Masterzeitgeber der interne Zeitgeber einer der Steuerungen bestimmt wird. Wesentlich ist dabei, dass die internen Zeitgeber der einzelnen Steuerungen eine zueinander synchrone Zeit aufweisen. Dabei ist es nicht notwendig, dass diese synchrone Zeit mit der Zeitmessung nach Atomuhr übereinstimmt.

Weiters kann vorgesehen sein, dass als interne Zeitgeber der beiden Steuerungen zwei Zeitgeber eingesetzt werden, welche die gleiche Auflösegenauigkeit der Taktung aufweisen. Hierbei ist von Vorteil, dass eine gewählte Zeiteinheit zur Vorgabe der Soll-Position der virtuellen Zahnlücke auch von der oder den weiteren Steuerungen aufgelöst werden kann.

Gemäß einer besonderen Ausprägung ist es möglich, dass, bei der Verwendung von zwei internen Zeitgebern der beiden Steuerungen, welche eine unterschiedliche Auflösegenauigkeit der Taktung haben, die Sollposition der virtuellen Zahnlücke auf Basis der Taktung jenes Zeitgebers mit der geringeren Auflösegenauigkeit berechnet wird. Durch diese Maßnahmen kann erreicht werden, dass nicht fälschlicherweise eine Zeiteinheit bzw. eine damit korrespondierende Zahnlückenposition berechnet wird, welche von einer der beiden Steuerungen nicht aufgelöst werden kann.

Eine Zeiteinheit im Sinne dieses Dokumentes ist von der Taktung, auch Taktfrequenz genannt, der internen Zeitgeber abhängig und entspricht der kleinsten vom Zeitgeber auflösbaren Zeiteinheit. Die Taktung der internen Zeitgeber wird vorzugsweise von einem Quarz erzeugt.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht der Fertigungsanlage in einer schematischen Darstellung;
- Fig. 2: den Werkstückträger in einer perspektivischen Ansicht von schräg unten;
- Fig. 3: eine schematische Darstellung der Synchronisierung der beiden Zahnriemen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

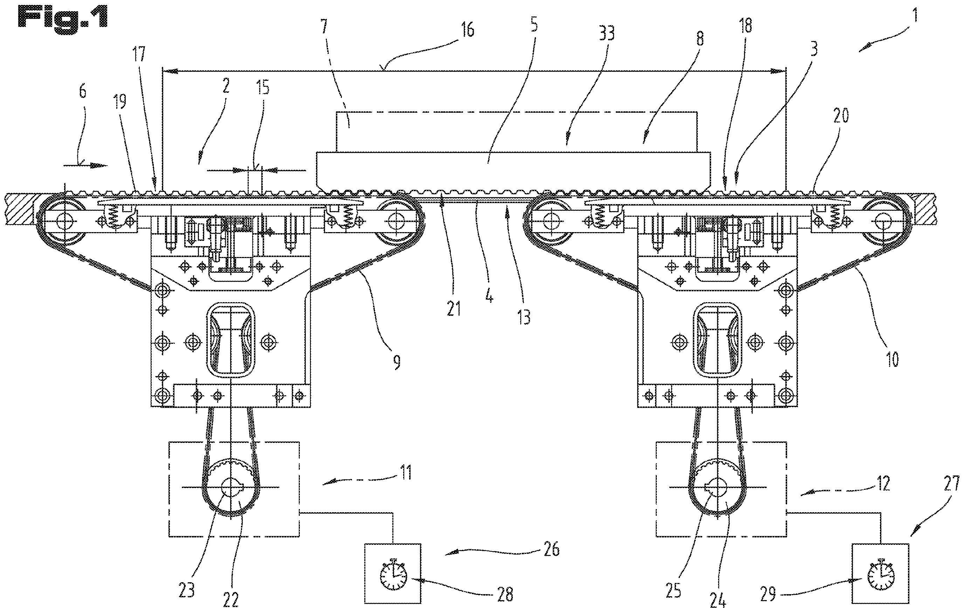

Fig. 1 zeigt in einer schematischen Seitenansicht eine Fertigungsanlage 1 mit einem ersten Förderabschnitt 2 und an diesen anschließend einen zweiten Förderabschnitt 3. Die Förderabschnitte 2, 3 umfassen eine Führungsanordnung 4 mittels welcher ein Werkstückträger 5 geführt bzw. gehalten werden kann. Mittels der Führungsanordnung 4 kann der Werkstückträger 5 daher zwangsgeführt werden, wobei dieser in Verschieberichtung 6 verschieblich in der Führungsanordnung 4 aufgenommen ist.

Der Werkstückträger 5 dient insbesondere dazu, um ein zu bearbeitendes Werkstück 7 aufnehmen zu können. Insbesondere können an einer Oberseite 8 des Werkstückträgers 5 eine oder mehrere Befestigungs- bzw. Klemmeinrichtungen vorgesehen sein, mittels welchem das Werkstück 7 am Werkstückträger 5 befestigt werden kann. In einer weiteren Ausführungsvariante kann vorgesehen sein, dass das Werkstück 7 lose auf den Werkstückträger 5 aufgelegt wird, wobei am Werkstückträger 5 entsprechende Aufnahmen für das Werkstück 7 vorgesehen sein können.

Wie aus Fig. 1 weiters ersichtlich, ist vorgesehen, dass der erste Förderabschnitt 2 ein erstes Mitnehmerelement, insbesondere einen ersten Zahnriemen 9, aufweist. Analog dazu weist der zweite Förderabschnitt 3 ein zweites Mitnehmerelement, insbesondere einen zweiten Zahnriemen 10, auf. Der erste Zahnriemen 9 wird von einer ersten Antriebseinheit 11 angetrieben und der zweite Zahnriemen 10 wird von einer zweiten Antriebseinheit 12 angetrieben.

Insbesondere ist vorgesehen, dass an einer Unterseite 13 des Werkstückträgers 5 eine Verzahnung 14 ausgebildet ist, welche mit den Zahnriemen 9, 10 korrespondiert. Die Verzahnung 14 weist vorzugsweise eine gleiche Zahnteilung 15 auf, wie die Zahnriemen 9, 10.

Wenn sich der Werkstückträger 5 innerhalb eines Übergabebereich 16 zwischen erstem Förderabschnitt 2 und zweitem Förderabschnitt 3 befindet stehen sowohl der erste Zahnriemen 9 als auch der zweite Zahnriemen 10 mit der Verzahnung 14 des Werkstückträgers 5 in Eingriff. Daher ist es notwendig, dass sich in diesem Zeitraum die beiden Zahnriemen 9, 10 synchron bewegen und auch dass eine Zahnlücke 17 des ersten Zahnriemen 9 und eine Zahnlücke 18 des zweiten Zahnriemen 18 entsprechend der Zahnteilung 15 zueinander positioniert sind. Insbesondere greift ein erster Zahn 19 des ersten Zahnriemen 9 und ein zweiter Zahn 20 des zweiten Zahnriemen 10 in eine Zahnlücke 21 der Verzahnung 14 des Werkstückträgers 5 ein.

Die Führungsanordnung 4 kann sich über die gesamte Länge der Fertigungsanlage 1 erstrecken, wobei der Werkstückträger 5 frei in der Führungsanordnung 4 verschiebbar ist. Erst durch die Zahnriemen 9, 10 ist der Werkstückträger 5 in seiner Position entlang der Führungsanordnung 4 zwangsgeführt.

Wie aus Fig. 1 weiters ersichtlich, weist die erste Antriebseinheit 11 ein erstes Ritzel 22 auf, mittels welchem der erste Zahnriemen 9 angetrieben wird. Das erste Ritzel 22 ist auf einer ersten Welle 23 angeordnet. Die zweite Antriebseinheit 12 weist ein zweites Ritzel 24 auf, mittels welchem der zweite Zahnriemen 10 angetrieben wird. Das zweite Ritzel 24 ist auf einer zweiten Welle 25 angeordnet.

Bei der erfindungsgemäßen Fertigungsanlage 1 ist eine erste Steuerung 26 zum Ansteuern des ersten Förderabschnittes 2 und eine zweite Steuerung 27 zum Ansteuern des zweien Förderabschnittes 3 vorgesehen. Die erste Steuerung 26 weist einen ersten internen Zeitgeber 28 auf und die zweite Steuerung 27 weist einen zweiten internen Zeitgeber 29 auf.

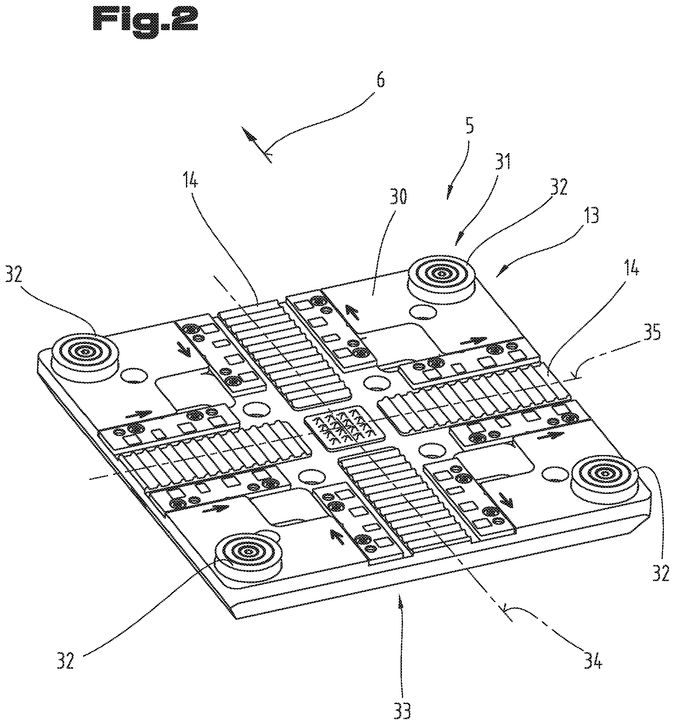

Fig. 2 zeigt eine perspektivische Ansicht eines Werkstückträgers 5. Die Ansicht ist derart ausgerichtet, dass die Unterseite 13 des Werkstückträgers 5 sichtbar ist. Wie in Fig. 2 ersichtlich, kann vorgesehen sein, dass der Werkstückträger 5 einen Werkstückträgerkörper 30 umfasst an welchem verschiedenste Elemente angeordnet sein können. Insbesondere kann an der Unterseite 13 des Werkstückträgerkörper 30 eine Führungseinrichtung 31 angeordnet sein, welche mit der Führungsanordnung 4 der Fertigungsanlage 1 korrespondiert und somit der Werkstückträger 5 zwangsgeführt werden kann.

Die Führungseinrichtung 31 kann insbesondere durch vier Führungsrollen 32 gebildet sein. Die Führungsrollen 32 können an deren Umfang eine Konturierung aufweisen, welche mit einer entsprechenden Gegenkonturierung der Führungsanordnung 4 korrespondiert. Insbesondere kann vorgesehen sein, dass die Führungsrollen 32 eine V-förmige Vertiefung aufweisen und dass die Führungsanordnung 4 eine entsprechen gegengleiche V-förmige Erhebung aufweisen. Generell ist jedoch jede Art von Kontur möglich, durch welche die Führungsanordnung 4 gebildet werden kann.

An der Oberseite 8 des Werkstückträgers 5, insbesondere am Werkstückträgerkörper 30 kann eine Werkstückaufnahme 33 angeordnet sein, in welcher das Werkstück 7 aufgenommen wird. Die Werkstückaufnahme 33 ist in der Darstellung der Fig. 2 nicht sichtbar.

Wie aus Fig. 2 weiters ersichtlich, kann vorgesehen sein, dass der Werkstückträgerkörper 30 im Wesentlichen bezüglich einer ersten Symmetrieebene 34 bzw. bezüglich einer zweiten Symmetrieebene 35 symmetrisch ausgebildet ist. Weiters kann vorgesehen sein, dass in beiden Orientierungsrichtungen mittig des Werkstückträgerkörpers 30 die Verzahnung 14 ausgebildet ist. Die Verzahnung 14 ist gegengleich zu den Zahnriemen 9, 10 ausgebildet, um mit diesen zu korrespondieren und dadurch den Werkstückträger 5 verschieben zu können.

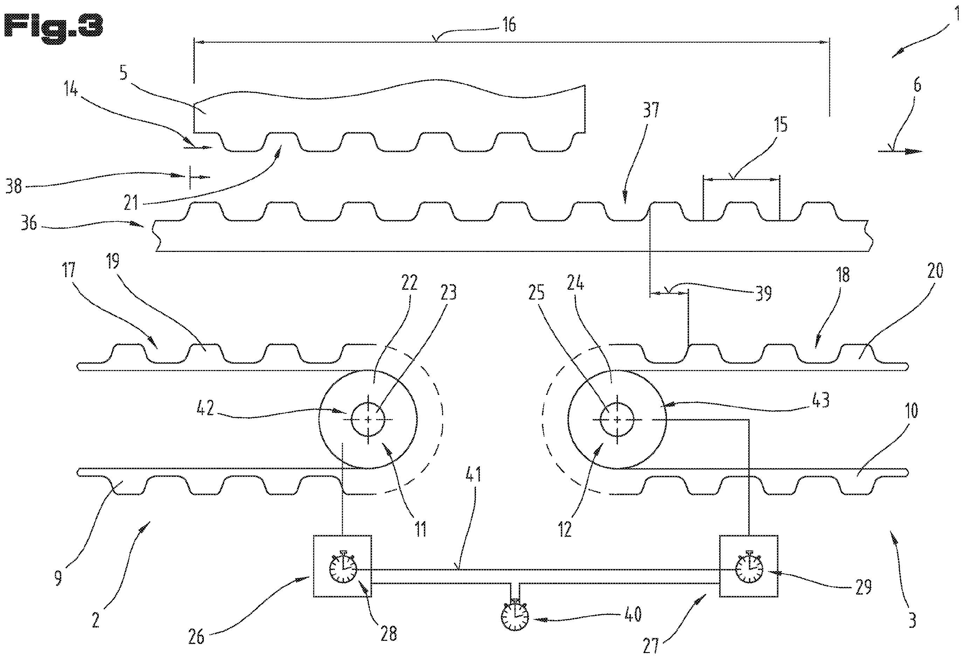

In der Fig. 3 ist eine weitere und gegebenenfalls für sich eigenständige Ausführungsform der Fertigungsanlage 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Fig. 3 zeigt eine schematische Darstellung des Verfahrens zur Übergabe des Werkstückträgers 5 vom ersten Förderabschnitt 2 auf den zweiten Förderabschnitt 3.

Wie aus Fig. 3 ersichtlich, wird sowohl von der ersten Steuerung 26 als auch von der zweiten Steuerung 27 ein virtueller Zahnriemen 36 errechnet, welcher sich zu einem gewissen Zeitpunkt in einer gewissen Position befindet. Erfindungsgemäß wird eine virtuelle Zahnlücke 37 berechnet, welche sich mit einer vorgegebenen Verfahrgeschwindigkeit in Verschieberichtung 6 bewegt.

Erfindungsgemäß ist vorgesehen, dass sich die virtuelle Zahnlücke 37 ausgehend von einer Referenzposition 38 zu einem Referenzzeitpunkt zu bewegen beginnt und sich mit der vorgegebenen Verfahrgeschwindigkeit in Verschieberichtung 6 bewegt. Dadurch wird zu jedem auf den Referenzzeitpunkt folgenden Zeitpunkt die genaue Soll-Position der virtuellen Zahnlücke 37 berechnet. Entsprechend der Zahnteilung 15 gibt es natürlich mehrere virtuelle Zahnlücken 37.

Der Werkstückträger 5 wird im ersten Förderabschnitt 2 vom ersten Zahnriemen 9 antransportiert, wobei der erste Zahn 19 des ersten Zahnriemens 9 in die Zahnlücke 21 der Verzahnung 14 eingreift. Dadurch sind der Werkstückträger 5 und der erste Zahnriemen 9 formschlüssig miteinander verbunden und ist der Werkstückträger 5 durch den ersten Zahnriemen 9 in Verschieberichtung 6 positioniert.

Wenn sich der Werkstückträger 5 außerhalb des Übergabebereiches 16 befindet, kann vorgesehen sein, dass der zweite Zahnriemen 10 stillsteht. Noch bevor der Werkstückträger 5 in den Übergabebereich 16 einfährt, wird der zweite Zahnriemen 10 in Bewegung gesetzt, wobei die Zahnlücke 18 des zweiten Zahnriemens 10 mit der virtuellen Zahnlücke 37 des virtuellen Zahnriemens 36 synchronisiert wird. Da nun sowohl der erste Zahnriemen 9 als auch der zweite Zahnriemen 10 mit dem virtuellen Zahnriemen 36 synchron sind, wird der Werkstückträger 5 problemlos in den Übergabebereich 16 eingeschoben, wobei im Übergabebereich 16 sowohl der erste Zahnriemen 9 als auch der zweite Zahnriemen 10 mit dem Werkstückträger 5 in Eingriff stehen.

Zur Herstellung der Synchronität der beiden Zahnriemen 9, 10 ist es nicht notwendig, dass von der ersten Steuerung 26 die aktuelle Position des zweiten Zahnriemens 10 und/oder von der zweiten Steuerung 27 die aktuelle Position des ersten Zahnriemens 9 erfasst wird, sondern wird die Soll-Position der virtuellen Zahnlücke 37, ausgehend von der Referenzposition 38 und von der vergangenen Zeit seit dem Referenzzeitpunkt berechnet.

Wenn der Werkstückträger 5 aus dem Übergabebereich 16 hinausbewegt wird, ist es denkbar, dass der erste Zahnriemen 9 in Stillstand versetzt wird, um beispielsweise Energie zu sparen.

Bei der Synchronisierung der Zahnlücke 17 des ersten Zahnriemens 9 bzw. der Zahnlücke 18 des zweiten Zahnriemens 10 mit der virtuellen Zahnlücke 37 kann vorgesehen sein, dass die Zahnlücke 17 bzw. 18 mit der nächstliegenden virtuellen Zahnlücke 37 synchronisiert wird. Durch diese Maßnahme kann erreicht werden, dass ein Synchronisierungsabstand 39 maximal eine halbe Zahnteilung 15 beträgt.

Da der virtuelle Zahnriemen 36 sowohl von der ersten Steuerung 26 als auch von der zweiten Steuerung 27 unabhängig voneinander berechnet wird, ist es notwendig, dass die interne Zeit der beiden Steuerungen 26, 27 absolut synchron läuft. Dies ist zumindest im Zeitraum während sich der Werkstückträger 5 im Übergabebereich 16 befindet notwendig. Insbesondere muss die aktuelle Zeit des ersten internen Zeitgebers 28 mit der aktuellen Zeit des zweiten internen Zeitgebers 29 übereinstimmen.

In der Darstellung der Fig. 3 ist der erste Zahnriemen 9 mit dem virtuellen Zahnriemen 36 synchronisiert und der zweite Zahnriemen 10 ist mit dem virtuellen Zahnriemen 36 nicht synchronisiert.

Aufgrund von Ungenauigkeiten in den Quarzen, welche für die Taktung der internen Zeitgeber 28, 29 zuständig sind, kann es vorkommen, dass sich über einen gewissen Zeitraum gesehen, die beiden internen Zeiten der internen Zeitgeber 28, 29 verschieben und somit nicht mehr synchron zueinander laufen. Daher kann es notwendig sein, dass die internen Zeitgeber 28, 29 der beiden Steuerungen 26, 27 in vorgegebenen Zeitabständen synchronisiert werden. Insbesondere hat es sich als vorteilhaft erwiesen, wenn die internen Zeitgeber 28, 29 der beiden Steuerungen 26, 27 vor dem Einfahren des Werkstückträgers 5 in den Übergabebereich 16 synchronisiert werden. Durch diese Maßnahme kann sichergestellt werden, dass der virtuelle Zahnriemen 36 von der ersten Steuerung 26 und von der zweiten Steuerung 27 synchron berechnet wird.

In einem ersten Ausführungsbeispiel ist es möglich, dass zum Synchronisieren der beiden internen Zeitgeber 28, 29 diese die synchrone Zeit von einem Masterzeitgeber 40 beziehen. Ein derartiger Masterzeitgeber 40 kann beispielsweise durch eine hochgenaue zentrale Uhr gebildet sein.

In einem weiteren Ausführungsbeispiel kann auch vorgesehen sein, dass die beiden Zeitgeber 28, 29 eine direkte Verbindung 41 zueinander aufweisen und dass einer der beiden Zeitgeber 28, 29 als Masterzeitgeber fungiert und die aktuelle Zeit vorgibt.

Generell ist es nicht notwendig, dass die Zeit in den internen Zeitgebern 28, 29 auch der tatsächlichen Zeit entspricht, sondern ist es nur notwendig, dass die Zeit der internen Zeitgeber 28, 29 synchron zueinander läuft.

Weiters kann vorgesehen sein, dass eine Fehlermeldung oder eine Warnung ausgegeben wird, wenn geplante Synchronisierungsversuche der beiden Zeitgeber 28, 29 nicht ordnungsgemäß funktionieren. Beispielsweise kann ein maximaler Zeitraum festgelegt werden, innerhalb welchem die Zeitgeber 28, 29 unbedingt synchronisiert werden müssen. Dieser Zeitraum kann sich etwa aus der Ungenauigkeit der beiden Zeitgeber 28, 29 und daher der auftretenden Zeitabweichung, sowie aus der maximal erlaubten Zahnriemenpositionsabweichung errechnen. Dadurch kann sichergestellt werden, dass während des Betriebes der Fertigungsanlage 1 keine Beschädigung einer der Zahnriemen 9, 10 oder des Werkstückträgers 5 aufgrund von Nicht-Synchronität der beiden Zahnriemen 9, 10 auftritt.

Die beschriebenen Mechanismen gelten natürlich nicht nur für zwei Förderabschnitte 2, 3, sondern können auf beliebig viele Förderabschnitte mit beliebig vielen Steuerungen angewendet werden.

Insbesondere hat es sich als sinnvoll erwiesen, wenn als interne Zeitgeber 28, 29 der beiden Steuerungen 26, 27 zwei Zeitgeber eingesetzt werden, welche die gleiche Auflösegenauigkeit der Taktung aufweisen.

In einer Alternativvariante ist es jedoch auch möglich, dass zwei interne Zeitgeber 28, 29 mit einer unterschiedlichen Auflösegenauigkeit der Taktung verwendet werden, wobei die Soll-Position der virtuellen Zahnlücke 37 auf Basis der Taktung jenes Zeitgebers 28, 29 mit der geringeren Auflösegenauigkeit berechnet wird. Wenn beispielsweise der erste Zeitgeber 28 eine Auflösegenauigkeit von zwei Nanosekunden und der zweite Zeitgeber 29 eine Auflösegenauigkeit von einer Nanosekunde aufweist, so wird die aktuelle Soll-Position der virtuellen Zahnlücke 37 in zwei Nanosekunden-Schritten berechnet.

Weiter ist es auch denkbar, dass mittels der Geometriedaten des Zahnriemens 9, 10 bzw. der Ritzel 22, 24 eine Soll-Winkelstellung der Wellen 23, 25 berechnet wird. Insbesondere kann dabei vorgesehen sein, dass die Winkelstellungen der Wellen 23, 25 durch eine erste Winkelmessvorrichtung 42 bzw. durch eine zweite Winkelmessvorrichtung 43 überwacht werden. Dadurch ist es möglich innerhalb der Steuerung 26, 27 die tatsächliche Position des Zahnriemens 9, 10 mit der Soll-Position verglichen wird.

Als Antriebseinheit 11, 12 können Elektromotoren, insbesondere Servomotoren verwendet werden, wobei die Winkelmessvorrichtungen 42, 43 direkt in diese Motoren integriert sein können.

Die Ausführungsbeispiele zeigen mögliche Ausführungsvarianten der Fertigungsanlage 1, wobei an dieser Stelle bemerkt sei, dass die Erfindung nicht auf die speziell dargestellten Ausführungsvarianten derselben eingeschränkt ist, sondern der Schutzumfang der Erfindung durch die Ansprüche definiert wird.

Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus der Fertigungsanlage 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Fertigungsanlage | 29 | zweiter interner Zeitgeber zweite Steuerung |
| 2 | erster Förderabschnitt | | |
| 3 | zweiter Förderabschnitt | 30 | Werkstückträgerkörper |
| 4 | Führungsanordnung | 31 | Führungseinrichtung |
| 5 | Werkstückträger | 32 | Führungsrolle |
| 6 | Verschieberichtung | 33 | Werkstückaufnahme |
| 7 | Werkstück | 34 | Erste Symmetrieebene |
| 8 | Oberseite Werkstückträger | 35 | Zweite Symmetrieebene |
| 9 | erster Zahnriemen | 36 | virtueller Zahnriemen |
| 10 | zweiter Zahnriemen | 37 | virtuelle Zahnlücke |
| 11 | erste Antriebseinheit | 38 | Referenzposition |
| 12 | zweite Antriebseinheit | 39 | Synchronisierungsabstand |
| 13 | Unterseite Werkstückträger | 40 | Masterzeitgeber |
| 14 | Verzahnung | 41 | direkte Verbindung |
| 15 | Zahnteilung | 42 | erste Winkelmessvorrichtung |
| 16 | Übergabebereich | 43 | zweite Winkelmessvorrichtung |
| 17 | Zahnlücke erster Zahnriemen | | |
| 18 | Zahnlücke zweiter Zahnriemen | | |
| 19 | erster Zahn erster Zahnriemen | | |
| 20 | zweiter Zahn zweiter Zahnriemen | | |
| 21 | Zahnlücke Verzahnung | | |
| 22 | erstes Ritzel | | |
| 23 | erste Welle | | |
| 24 | zweites Ritzel | | |
| 25 | zweite Welle | | |
| 26 | erste Steuerung | | |
| 27 | zweite Steuerung | | |
| 28 | erster interner Zeitgeber erste Steuerung | | |

## Patentansprüche

1. Verfahren zur Übergabe eines Werkstückträgers (5) in einer Fertigungsanlage (1) von einem ersten Förderabschnitt (2) an einen zweiten Förderabschnitt (3), wobei der Werkstückträger (5) in einer Führungsanordnung (4) der Fertigungsanlage (1) geführt wird und wobei die Förderabschnitte (2, 3) jeweils einen Zahnriemen (9, 10) umfassen, welche Zahnriemen (9, 10) jeweils mittels einem auf einer Welle (23, 25) einer Antriebseinheit (11, 12) angeordneten Ritzel (22, 24) angetrieben werden und welche Zahnriemen (9, 10) in eine korrespondierende Verzahnung (14) des Werkstückträgers (5) eingreifen, wobei der Werkstückträger (5) durch die Zahnriemen (9) entlang der Führungsanordnung (4) verschoben wird und in einem Übergabebereich (16) sowohl der erste Zahnriemen (9) als auch der zweite Zahnriemen (10) mit der Verzahnung (14) des Werkstückträgers (5) in Wirkverbindung stehen, **dadurch gekennzeichnet, dass** der erste Förderabschnitt (2) von einer ersten Steuerung (26) angesteuert wird und dass der zweite Förderabschnitt (3) von einer zweiten Steuerung (27) angesteuert wird, wobei ein virtueller Zahnriemen (36) von der ersten Steuerung (26) als auch von der zweiten Steuerung (27) errechnet wird, welcher sich zu einem gewissen Zeitpunkt in einer gewissen Position befindet, wobei der virtuelle Zahnriemen (36) entsprechend der Zahnteilung (15) der Zahnriemen (9, 10) mehrere virtuelle Zahnlücken (37) aufweist, wobei auf Basis eines internen Zeitgebers (28, 29) der beiden Steuerungen (26, 27) unter Berücksichtigung der vorgegebenen Verfahrgeschwindigkeit des Werkstückträgers (5) und unter Berücksichtigung der Zahnteilung (15) der Zahnriemen (9, 10) eine Sollposition der virtuellen Zahnlücke (37) im Übergabebereich (16) der Förderabschnitte (2, 3) berechnet wird, wobei sich die virtuelle Zahnlücke (37) ausgehend von einer Referenzposition (38) zu einem Referenzzeitpunkt zu bewegen beginnt und sich mit der vorgegebenen Verfahrgeschwindigkeit in einer Verschieberichtung (6) bewegt, wobei die Zahnriemen (9, 10) über die Antriebseinheiten (11, 12) von der jeweiligen Steuerung (26, 27) derart angesteuert und synchronisiert werden, dass sowohl eine erste Zahnlücke (17) des ersten Zahnriemens (9) als auch eine zweite Zahnlücke (18) des zweiten Zahnriemens (10) mit der Sollposition der virtuellen Zahnlücke (37) synchronisiert wird, so dass der Werkstückträger (5) problemlos in den Übergabebereich (16) eingeschoben wird, wobei im Übergabebereich (16) sowohl der erste Zahnriemen (9) als auch der zweite Zahnriemen (10) mit dem Werkstückträger (5) in Eingriff stehen, wobei die Sollposition der virtuellen Zahnlücke (37) auf Basis der vergangenen Zeiteinheiten seit dem Referenzzeitpunkt berechnet wird.

2. Verfahren nach Anspruch 1, **dadurch gekennzeichnet, dass** die internen Zeitgeber (28, 29) der beiden Steuerungen (26, 27) in vorgegebenen Zeitabständen synchronisiert werden.

3. Verfahren nach Anspruch 1 oder 2, **dadurch gekennzeichnet, dass** die internen Zeitgeber (28, 29) der beiden Steuerungen (26, 27) vor dem Einfahren des Werkstückträgers (5) in den Übergabebereich (16) synchronisiert werden.

4. Verfahren nach einem der vorhergehenden Ansprüche, **dadurch gekennzeichnet, dass** die Zahnlücken (17, 18) der Zahnriemen (9, 10) jeweils mit der nächstliegenden virtuellen Zahnlücke (37) synchronisiert werden.

5. Verfahren nach einem der vorhergehenden Ansprüche, **dadurch gekennzeichnet, dass** die beiden Steuerungen (26, 27) mittels der Sollposition der virtuellen Zahnlücke (37) und mittels der Geometriedaten der Ritzel (22, 24) eine Sollwinkelstellung der Wellen (23, 25) der Antriebseinheiten (11, 12) berechnen, wobei die Winkelstellungen der Wellen (23, 25) synchronisiert und gegebenenfalls überwacht werden.

6. Verfahren nach einem der Ansprüche 1 bis 5, **dadurch gekennzeichnet, dass** als Referenzzeitpunkt der letzte Synchronisierungszeitpunkt der internen Zeitgeber (28, 29) der beiden Steuerungen (26, 27) gewählt wird.

7. Verfahren nach einem der Ansprüche 1 bis 6, **dadurch gekennzeichnet, dass** zum Synchronisieren der internen Zeitgeber (28, 29) der beiden Steuerungen (26, 27) ein Masterzeitgeber (40) festgelegt wird, von welchem die Zeit bezogen wird.

8. Verfahren nach einem der vorhergehenden Ansprüche, **dadurch gekennzeichnet, dass** als interne Zeitgeber (28, 29) der beiden Steuerungen (26, 27) zwei Zeitgeber eingesetzt werden, welche die gleiche Auflösegenauigkeit der Taktung aufweisen.

9. Verfahren nach einem der Ansprüche 1 bis 7, **dadurch gekennzeichnet, dass**, bei der Verwendung von zwei internen Zeitgebern (28, 29) der beiden Steuerungen (26, 27), welche eine unterschiedliche Auflösegenauigkeit der Taktung haben, die Sollposition der virtuellen Zahnlücke (37) auf Basis der Taktung jenes Zeitgebers (28, 29) mit der geringeren Auflösegenauigkeit berechnet wird.

## Claims

1. A method for transferring a workpiece carrier (5) in a production plant (1) from a first conveying section (2) to a second conveying section (3), wherein the workpiece carrier (5) is guided in a guide arrangement (4) of the production plant (1) and wherein the conveying sections (2, 3) each comprise a toothed belt (9, 10), said toothed belts (9, 10) each being driven by means of a pinion (22, 24) arranged on a shaft (23, 25) of a drive unit (11, 12) and said toothed belts (9, 10) engaging in a corresponding toothing (14) of the workpiece carrier (5), wherein the workpiece carrier (5) is displaced along the guide arrangement (4) by means of the toothed belts (9) and both the first toothed belt (9) and the second toothed belt (10) are in operative connection with the toothing (14) of the workpiece carrier (5) in a transfer region (16), **characterized in that** the first conveying section (2) is controlled by a first controller (26) and that the second conveying section (3) is controlled by a second controller (27), wherein a virtual toothed belt (36) is calculated by both the first controller (26) and the second controller (27), which virtual toothed belt (36) is at a certain position at a certain time, wherein the virtual toothed belt (36) has multiple virtual tooth spaces (37) corresponding to the tooth pitch (15) of the toothed belts (9, 10), wherein, on the basis of an internal timer (28, 29) in both controllers (26, 27), a desired position of the virtual tooth space (37) in the transfer region (16) of the conveying sections (2, 3) is calculated, taking the predefined movement speed of the workpiece carrier (5) into consideration and taking the tooth pitch (15) of the toothed belts (9, 10) into consideration, wherein the virtual tooth space (37) starts moving from a reference position (38) at a reference time and moves at the predefined movement speed in a direction of displacement (6),
wherein the toothed belts (9, 10) are controlled and synchronized by the respective controller (26, 27) via the drive units (11, 12) such that both a first tooth space (17) of the first toothed belt (9) and a second tooth space (18) of the second toothed belt (10) is synchronized with the desired position of the virtual tooth space (37), so that the workpiece carrier (5) is moved into the transfer region (16) without problems, wherein both the first toothed belt (9) and the second toothed belt (10) are engaged with the workpiece carrier (5) in the transfer region (16), wherein the desired position of the virtual tooth space (37) is calculated on the basis of the time units that have elapsed since the reference time.

2. The method according to claim 1, **characterized in that** the internal timers (28, 29) of both controllers (26, 27) are synchronized at predefined intervals.

3. The method according to claim 1 or 2, **characterized in that** the internal timers (28, 29) of both controllers (26, 27) are synchronized before moving the workpiece carrier (5) into the transfer region (16).

4. The method according to any of the preceding claims, **characterized in that** the tooth spaces (17, 18) of the toothed belts (9, 10) are each synchronized with the adjacent virtual tooth space (37).

5. The method according to one of the preceding claims, **characterized in that** the two controllers (26, 27) calculate a desired angular position of the shafts (23, 25) of the drive units (11, 12) by means of the desired position of the virtual tooth space (37) and by means of the geometric data for the pinions (22, 24), wherein the angular positions of the shafts (23, 25) are synchronized and monitored if applicable.

6. The method according to one of claims 1 to 5, **characterized in that** the last synchronization time of the internal timers (28, 29) of the two controllers (26, 27) is selected as the reference time.

7. The method according to one of claims 1 to 6, **characterized in that** a master timer (40) is defined to synchronize the internal timers (28, 29) of the two controllers (26, 27) and the time is obtained from said master timer.

8. The method according to one of the preceding claims, **characterized in that** two timers are used as internal timers (28, 29) of the two controllers (26, 27), said timers (28, 29) displaying the same clock rate resolution accuracy.

9. The method according to one of claims 1 to 7, **characterized in that**, when using two internal timers (28, 29) in the two controllers (26, 27), which have a different clock rate resolution accuracy, the desired position of the virtual tooth space (37) is calculated on the basis of the clock rate of the timer (28, 29) with the lower resolution accuracy.

## Revendications

1. Procédé de transfert d'un porte-pièces (5) dans une installation de fabrication (1) d'une première portion de convoyage (2) vers une deuxième portion de convoyage (3), dans lequel le porte-pièces (5) est guidé dans un dispositif de guidage (4) de l'installation de fabrication (1) et dans lequel les portions de convoyage (2, 3) comprennent chacune une courroie dentée (9, 10), ces courroies dentées (9, 10) étant entraînées chacune au moyen d'un pignon (22, 24) disposé sur un arbre (23, 25) d'une unité d'entraînement (11, 12) et ces courroies dentées (9, 10) s'emboîtant dans une denture (14) correspondante du porte-pièces (5), dans lequel le porte-pièces (5) est déplacé par les courroies dentées (9) le long du dispositif de guidage (4) et, dans une zone de transfert (16), aussi bien la première courroie dentée (9) que la deuxième courroie dentée (10) sont en liaison fonctionnelle avec la denture (14) du porte-pièces (5), **caractérisé en ce que** la première portion de convoyage (2) est contrôlée par une première commande (26) et **en ce que** la deuxième portion de convoyage (3) est contrôlée par une deuxième commande (27), dans lequel une courroie dentée virtuelle (36), est calculée par la première commande (26) ainsi que par la deuxième commande (27), qui se trouve à un moment déterminé dans une position déterminée, dans lequel la courroie virtuelle (36) comprend, en fonction du pas de denture (15) de la courroie dentée (9, 10), plusieurs entredents virtuels (37), dans lequel, sur la base d'un minuteur interne (28, 29) des deux commandes (26, 27), en tenant compte de la vitesse de déplacement prédéterminée du porte-pièces (5) et en tenant compte du pas de denture (15) des courroies dentées (9, 10), une position de consigne de l'entredent virtuel (37) dans la zone de transfert (16) des portions de convoyage (2, 3) est calculée, dans lequel l'entredent virtuel (37) commence à se déplacement à partir d'une position de référence (38) à un moment de référence et se déplace avec la vitesse de déplacement déterminée dans une direction de déplacement (6), dans lequel les courroies dentées (9, 10) sont contrôlées et synchronisées par l'intermédiaire des unités d'entraînement (11, 12), par leur commande respective (26, 27) de façon à ce qu'un premier entredent (17) de la première courroie dentée (9) ainsi qu'un deuxième entredent (18) de la deuxième courroie dentée (10) soient synchronisés avec la position de consigne de l'entredent virtuel (37), de façon à ce que le porte-pièces (5) soit inséré sans problème dans la zone de transfert (16), dans lequel, dans la zone de transfert (16), aussi bien la première courroie dentée (9) que la deuxième courroie dentée (10) sont emboîtées avec le porte-pièces (5), dans lequel la position de consigne de l'entredent virtuel (37) est calculée sur la base des unités de temps écoulées depuis le moment de référence.

2. Procédé selon la revendication 1, **caractérisé en ce que** les minuteurs internes (28, 29) des deux commandes (26, 27) sont synchronisés à des intervalles de temps prédéterminés.

3. Procédé selon la revendication 1 ou 2, **caractérisé en ce que** les minuteurs internes (28, 29) des deux commandes (26, 27) sont synchronisés avant l'entrée du porte-pièces (5) dans la zone de transfert (16).

4. Procédé selon l'une des revendications précédentes, **caractérisé en ce que** les entredents (17, 18) des courroies dentées (9, 10) sont synchronisés chacun avec l'entredent virtuel (37) le plus proche.

5. Procédé selon l'une des revendications précédentes, **caractérisé en ce que** les deux commandes (26, 27) calculent, au moyen de la position de consigne de l'entredent virtuel (37) et au moyen des données géométriques des pignons (22, 24), un réglage angulaire de consigne des arbres (23, 25) des unités d'entraînement (11, 12), dans lequel les réglages angulaires des arbres (23, 25) sont synchronisés et, le cas échéant, surveillés.

6. Procédé selon l'une des revendications 1 à 5, **caractérisé en ce que**, en tant que moment de référence, le dernier moment de synchronisation des minuteurs internes (28, 29) des deux commandes (26, 27) est choisi.

7. Procédé selon l'une des revendications 1 à 6, **caractérisé en ce que**, pour la synchronisation des minuteurs internes (28, 29) des deux commandes (26, 27), un minuteur maître (40) est défini, qui donne le temps.

8. Procédé selon l'une des revendications précédentes, **caractérisé en ce que**, en tant que minuteurs internes (28, 29) des deux commandes (26, 27), on utilise deux minuteurs qui présentent la même précision de cadencement.

9. Procédé selon l'une des revendications 1 à 7, **caractérisé en ce que**, lors de l'utilisation deux minuteurs internes (28, 29) des deux commandes (26, 27), qui présentent des précisions de cadencement différentes, la position de consigne de l'entredent virtuel (37) est calculée sur la base du cadencement du minuteur (28, 29) avec la précision la plus faible.
